# EUROPEAN PATENT SPECIFICATION

(11) **EP 1 972 827 B1**
(45) Date of publication and mention of the grant of the patent: **26.05.2010**
(21) Application number: 07706490.5
(22) Date of filing: 10.01.2007
(51) Int. Cl.: F16F 15/06

(54) **MULTI-LEAF SPRING TYPE VIBRATION DAMPING DEVICE**
DÄMPFUNGSVORRICHTUNG MIT MEHRBLÄTTRIGEN FEDERN
DISPOSITIF D AMORTISSEMENT A RESSORT A LAMES MULTIPLES

(30) Priority: 10.01.2006 JP 2006002277
(43) Date of publication of application: 24.09.2008
(73) Proprietor: SINTOKOGIO, LTD., Nagoya-shi, Aichi 450-0002 (JP)
(72) Inventor: HOTTA, Masaya, Toyokawa-shi Aichi 442-0061 (JP); ISHIGURO, Hirohide, Toyokawa-shi Aichi 442-0061 (JP); MORIMITSU, Hideki, Toyokawa-shi Aichi 442-0061 (JP); NAGASAKA, Masahiko, Toyokawa-shi Aichi 442-0061 (JP); AOKI, Tomohiro, Toyokawa-shi Aichi 442-0061 (JP)
(74) Representative: Thum, Bernhard
(86) International application number: PCT/JP2007/050143
(87) International publication number: WO 2007/080878

(56) References cited:
- WO-A1-2005/026574
- JP-A- 07 190 141
- JP-A- 2004 340 167

## Description

### Technical Field

This invention relates to a multi-leaf spring-type vibration damping device and in particular to one in which a bearing of a rotating shaft system that includes at least a rotating shaft fit in the bearing and a rotor mounted on the rotating shaft is clamped between a plurality of fixedly mounted and properly spaced-apart multi-leaf springs at portions near their distal ends, or the plurality of multi-leaf springs contact at those portions near the distal ends with the bearing, thereby to suppress the whirling vibrations of the bearing,

### Background Art

In general, a rotating shaft system that includes at least a rotating shaft and a rotor mounted on the rotating shaft goes in the area of resonance rotations and resonates when it rotates at a speed near the major critical speed.

Further, after a rotating shaft system reaches a high rotational speed greater than a major critical speed and goes beyond the area of resonance rotations, and when the system goes in the area of stable rotations and continues rotating at that high rotational speed, it sometimes greatly vibrates due to suddenly generated self-excited vibrations etc.

Further, JP H07-190141 A discloses a vibration damping device for suppressing the whirling vibrations generated in a rotating shaft system. In that device an inner ring in which a bearing is fit is clamped by a plurality of multi-leaf springs at portions near their distal ends, while their proximal ends are fixed to an outer ring so as to suppress the whirling vibrations of the system by friction forces between the multi-leaf springs

### Disclosure of the Invention

Though the inventors of the present invention attempted to apply the vibration damping device of JP H07-190141 A to a rotating shaft system to suppress its resonance vibrations or self-excited vibrations, they cannot obtain a desired effect.

Accordingly, they tried to change the thickness of the plates of the plate spring and to increase the number of the plates to increase the spring constant of the multi-leaf spring, i.e., to increase the vibration damping force of the spring. However, this arrangement allowed the multi-leaf spring to securely support the bearing and to be more integrated with the rotating shaft system, causing a problem in that the acceleration of the steady-state vibrations generated during the usual rotations of a rotating shaft system will be greater.

The present invention has been conceived in view of that problem, and the purpose of it is to provide a multi-leaf spring-type vibration damping device that can suppress resonance of a rotating shaft system due to its rotations at a speed near its major critical speed and suppress self-excited vibrations of the system rotating at a speed greater than the major critical speed.

To achieve that purpose, a vibration damping device of the present invention is a multi-leaf spring-type vibration damping device in which a bearing of a rotating shaft system that includes at least a rotating shaft that is fit in the bearing and a rotor mounted on the rotating shaft is clamped between a plurality of fixedly mounted and properly spaced-apart multi-leaf springs at portions near distal ends thereof, or the plurality of multi-leaf springs contact at those portions near the distal ends with the bearing, thereby to suppress whirling vibrations of the bearing, **characterized in that** each multi-leaf spring is made into a multi-leaf spring unit that has a double multi-leaf spring structure in which an auxiliary multi-leaf spring having a structure substantially identical to that of the multi-leaf spring is faced and fixed at a portion near a proximal end thereof to a portion near a proximal end of each multi-leaf spring through a spacer, and in which the distal end of the auxiliary multi-leaf spring is in advance forced in a direction opposite the multi-leaf spring so as to have a resilient force of a predetermined magnitude.

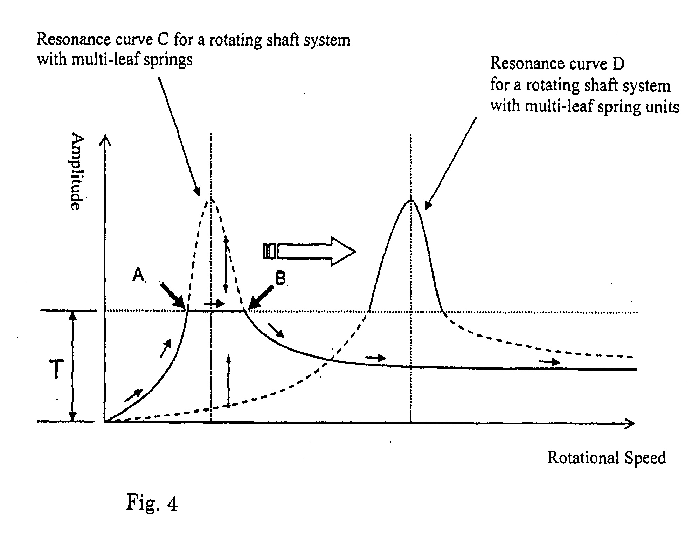

The phenomenon to suppress the resonance of a rotating shaft system is explained in detail on the basis of Figure 4 that shows a resonance curve C for a rotating shaft system with the multi-leaf springs and a resonance curve D for a rotating shaft system with the multi-leaf spring units. Specifically, the amplitude of the distal end of a rotating shaft of a rotating shaft system gradually grows as the rotational speed of the system gradually becomes high as in a resonance curve C of Figure 4, as reaching Point A, where the amplitude is T. The state of the distal end of the rotating shaft then tends to one shown by the dotted line of the resonance curve C if the auxiliary multi-leaf spring is not provided. However, beyond the point A the distal end of the multi-leaf spring comes into contact with the distal end of the auxiliary multi-leaf spring, which is in advance forced in the direction opposite the multi-leaf spring and has a resilient force of a predetermined magnitude, and is hence effected by the auxiliary multi-leaf spring. Specifically, due to that discontinuous spring characteristic the state of the distal end temporarily shifts to the one shown by the solid line of the resonance curve D from the one shown in a dotted line of the resonance curve C. As a result, the state of the distal end transits with the amplitude of it being kept as T when the rotating speed of the rotating shaft system increases. When it goes beyond Point B, a damping force is applied to the rotating shaft from the multi-leaf spring and a restoring force is created in the rotating shaft. Thus the distal end of the multi-leaf spring moves away from the multi-leaf spring unit, and the rotating shaft returns to its original center position and continues rotating. Thus the resonance of the rotating shaft system and the multi-leaf spring is prevented.

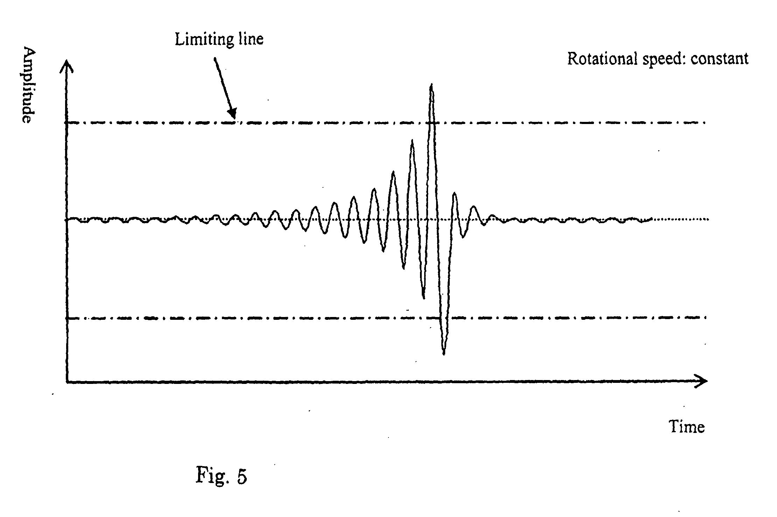

Further, the phenomenon to suppress self-excited vibrations of a rotating shaft system is explained in detail on the basis of Figure 5 that shows the state of change in the amplitude over time of the distal end of a rotating shaft of a rotating shaft system when it is subjected to a disturbance while rotating at a constant speed. Specifically, when the rotating speed of rotating shaft system further increases, so that the system rotates at a constant speed higher than the major critical speed, and when a long period of time then passed, so that the self-excited vibrations are suddenly generated in the rotating shaft system by a disturbance etc., the whirling vibrations of the distal end of the rotating shaft caused by the self-excited vibrations is first suppressed by the multi-leaf spring. A part of the whirling vibrations that goes beyond the remaining part of them suppressed by the multi-leaf spring is suppressed by the damping force of the auxiliary multi-leaf spring, while the rotating shaft returns to its original position due to its restoring force. Thus the amplitude of the distal end of the rotating shaft becomes less. The rotating shaft system then continues rotating at a constant rotational speed.

### Effect of the Invention

It is clear from the forgoing explanation that the present invention is arranged as a multi-leaf spring-type vibration damping device in which a bearing of a rotating shaft system including at least a rotating shaft that is fit in the bearing and a rotor mounted on the rotating shaft is clamped between a plurality of fixedly mounted and properly spaced-apart multi-leaf springs at portions near distal ends thereof, or those portions near the distal ends of the plurality of multi-leaf springs contact with the bearing, thereby to suppress whirling vibrations of the bearing, wherein each multi-leaf spring is made into a multi-leaf spring unit that has a double multi-leaf spring structure in which an auxiliary multi-leaf spring having a structure substantially identical to that of the multi-leaf spring is faced and fixed at a portion near a proximal end thereof to a portion near a proximal end of each multi-leaf spring through a spacer, and in which the distal end of the auxiliary multi-leaf spring is in advance forced in a direction opposite the multi-leaf spring so as to have a resilient force of a predetermined magnitude. Accordingly, when the rotating shaft system rotates at a speed near the major critical speed, the state of the distal end of the rotating shaft temporally shifts from a resonance curve of the rotating shaft system with the multi-leaf springs to a resonance curve of the rotating shaft system with the multi-leaf spring units in the area where the rotational speed of the system is higher than the major critical speed so that the state passes through a resonance area when the rotational speed is increased, with an amplitude of the rotating shaft being kept less than an amplitude at a resonance point of the rotating shaft system with the multi-leaf springs, thereby to avoid a resonance of the system and the multi-leaf springs. Further, when self-excited vibrations are generated in the rotating shaft system rotating at a speed higher than the major critical speed, a part of the vibrations that goes beyond the remaining part suppressed by the multi-leas springs can be suppressed by the damping forces of the auxiliary multi-leas springs, so that both the resonance due to rotations of the rotating shaft system rotating at a speed near the major critical speed and self-excited vibrations in the rotating shaft system rotating at a speed higher than the major critical speed can be advantageously and appropriately suppressed.

Specifically, the structure of the multi-leaf spring units made by combining the multi-leaf springs and the auxiliary multi-leaf springs can allow the system to smoothly pass through a resonance and can control a sudden occurrence of an unbalance of the system due to a damage of a part during the rotations of the system and control the change in a resonance point, and can allow the system to safely stop operating.

### Brief Description of the Drawings

Figure 1 is a fragmentally cross-sectional front view of an embodiment of the present invention.
Figure 2 is a view taken in the direction shown by arrows A-A of Figure 1.
Figure 3 is a fragmentally cross-sectional front view of an embodiment of a rotating shaft system that applies the multi-leaf spring-type vibration damping device of the present invention.
Figure 4 is a diagramatic chart showing a resonance curve C for a rotating shaft system with the multi-leaf springs and a resonance curve D for a rotating shaft system with the multi-leaf spring units.
Figure 5 is a diagramatic chart showing the effect of the present invention when the rotating shaft system rotates at a constant rotating speed higher than a major critical speed while self-excited vibrations are caused over time.
Figure 6 is a diagramatic chart for comparing the performances of a conventional, multi-leaf spring-type vibration damping device and the multi-leaf spring-type vibration damping device of the present invention.

### Best Mode for Carrying out the Invention

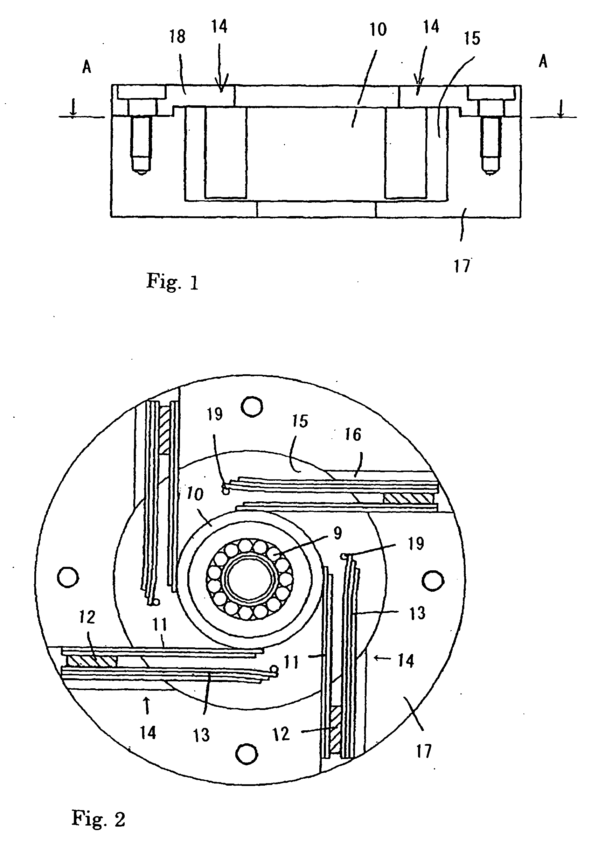

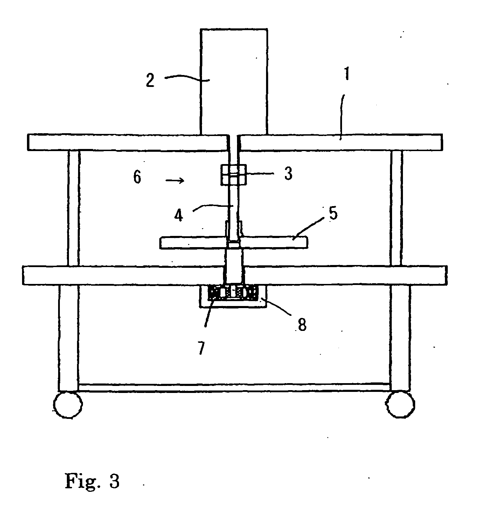

Below an embodiment of a device of a rotating shaft system that applies the multi-leaf spring-type vibration damping device of the present invention is explained in detail on the basis of Figures 1-6. As shown in Figure 3, the device of the rotating shaft system includes a machine base 1 having a structure provided with two vertically-arranged tables, a downwardly-facing electric motor 2 mounted on the center part of the upper table of the machine base, a rotating shaft system 6 including a rotating shaft 4 extending vertically and coupled to the output shaft of the electric motor 1 through a shaft coupling 3 and a disc 5 mounted on the rotating shaft 4, a multi-leaf spring-type vibration damping device 7 fit on the lower end of the rotating shaft 4 for suppressing the whirling vibrations of the lower end, and a casing 8 disposed on the undersurface of the center part of the lower table of the machine base 1 for holding the multi-leaf spring-type vibration damping device 7.

Further, as shown in Figures 1 and 2, the multi-leaf spring-type vibration damping device 7 includes a plurality of multi-leaf spring units 14 each having a double multi-leaf spring structure having a multi-leaf spring 11 for clamping together with other multi-leaf springs 11 at portions near their distal ends a bearing holder 10 in which a bearing 9 (for example, a ball bearing) is fit, and an auxiliary multi-leaf spring 13 faced parallel with the multi-leaf spring 11 and fixed at a portion near its proximal end to the multi-leaf spring at a portion near its proximal end through a spacer 12 so that the auxiliary multi-leaf spring 13 efficiently receives a force from the multi-leaf spring 11. The auxiliary multi-leaf spring 13 has a structure substantially identical to that of the multi-leaf spring 11. Further, the distal end of the auxiliary multi-leaf spring 13 is in advance forced in a direction opposite the multi-leaf spring, so that it has a resilient force of a predetermined magnitude. The multi-leaf spring-type vibration damping device 7 further includes a retainer 17 formed as a short cylinder and a doughnut lid member 18 attached to the top of the retainer 17. The retainer 17 has a short, cylindrically-shaped depression 15 in the top of the center part of it for disposing the bearing holder 10. Grooves 16 are formed in a surface of the retainer 17. The multi-leaf spring units 14 are disposed in the grooves and extend horizontally with their sides lying in the grooves. Further, the depression 15 of the retainer 17 is filled with a lubricant such as grease or oil. Exemplary, four multi-leaf spring units 14 are used in the embodiment shown in Figure 2. However, to enhance the integral action of all units, using three or more units is preferable.

Both the multi-leaf spring 11 and the auxiliary multi-leaf spring 13 of each multi-leaf spring unit 14 are formed by a plurality of plate springs differing in length. The proximal ends of the plate springs are aligned, while their distal ends are stepped.

Further, in each multi-leaf spring unit 14 the auxiliary multi-leaf spring 13 is in advance forced at its distal end in the direction opposite the multi-leaf spring 11 so that the distal end is deformed. The deformation of the distal end is retained by a pin 19 fixed in the retainer 17 (see Figure 2). Accordingly, the auxiliary multi-leaf spring 13 has a resilient force of a predetermined magnitude directed to the multi-leaf spring 11.

In the rotating shaft system 6 so arranged as explained above, the amplitude of the bearing holder 10 gradually grows as the rotational speed of the system 6 gradually becomes high as in a resonance curve C of Figure 4, reaching Point A, where the amplitude is T. The stage of the bearing holder 10 then tends to the one shown by the dotted line of the resonance curve C if the auxiliary multi-leaf spring 13 is not provided. However, beyond the point A the distal end of the multi-leaf spring 11 comes into contact with the distal end of the auxiliary multi-leaf spring 13, which is in advance forced in the direction opposite the multi-leaf spring 11 and has a resilient force of a predetermined magnitude, and is hence effected by the auxiliary multi-leaf spring 13. Specifically, due to that discontinuous spring characteristic the state of the bearing holder 10 temporarily shifts to the one shown by the solid line of the resonance curve D from the one shown in a dotted line of the resonance curve C. As a result, the state of bearing holder transits with the amplitude of the bearing holder 10 being kept as T when the rotating speed of the rotating shaft system 6 increases. When it goes beyond Point B, a damping force is applied to the bearing holder 10 from the multi-leaf spring 11 and a restoring force is created in the rotating shaft 4. Thus the distal end of the multi-leaf spring 11 moves away from the multi-leaf spring unit 13, and the rotating shaft 4 returns to its original center position and continues rotating. Thus the resonance of system 6 and the multi-leaf spring 11 is prevented.

Further, the phenomenon in that self-excited vibrations of the rotating shaft system 6 are suppressed is described in detail on the basis of Figure 5. Specifically, when the rotating speed of rotating shaft system 6 further increases, so that the system rotates at a constant speed higher than the major critical speed, and when a long period of time then passed, so that the self-excited vibrations are generated in the rotating shaft system 6 by disturbance etc., the whirling vibrations of the bearing holder 10 due to this self-excited vibrations is first suppressed by the multi-leaf spring 11. A part of the whirling vibrations that is not suppressed by the multi-leaf spring 11 is suppressed by the damping force of the auxiliary multi-leaf spring 13, while the rotating shaft 4 returns to its original position due to its restoring force. Thus the amplitude of the bearing holder 10 becomes less. The rotating shaft system 6 then continues rotating at a constant rotational speed.

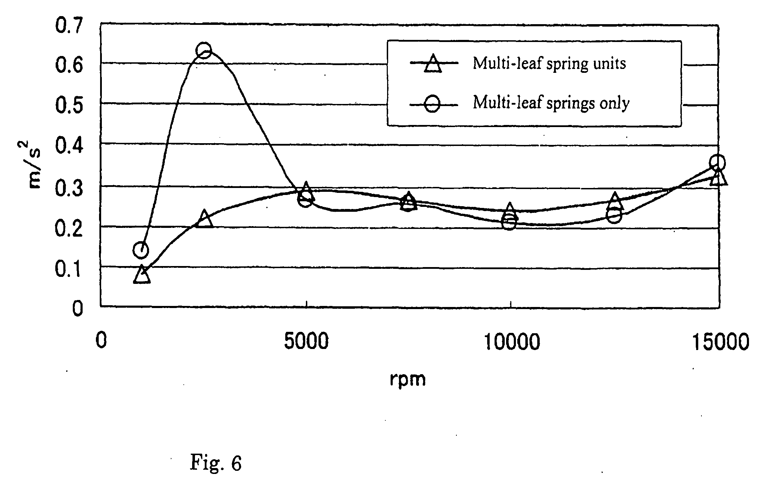

The change in the acceleration of the vibrations of the bearing holder 10 that is suppressed only by the multi-leaf springs and the change in the acceleration of the vibrations of the bearing holder 10 that is suppressed by the multi-leaf spring units are compared in the diagramatic chart of Figure 6. It is understood that the multi-leaf spring units of the present invention have an excellent vibration-reducing effect compared with the conventional, multi-leaf springs.

The multi-leaf spring-type vibration damping device of the present invention can be used as a means to suppress the whirling vibrations of a bearing or a holder for the bearing in which a rotating shaft of a rotating shaft system is fit, which rotating shaft may be attached to a centrifugal separator, a washing machine, a dewatering machine, a flat axis, a liquid container, and a ball balance, etc. Further, it can be used as a means to suppress the whirling vibrations of a rotating shaft of a rotating shaft system of an engine of a car, an aircraft, and an ocean vessel, etc. In addition, it can be used as a backup means of a magnetic bearing.

Though the embodiment of the present invention is explained above, it is only an example, and the present invention is not limited to it, but intends to include many changes or modifications of the embodiment that are to be made without departing from the scope and the spirit of the invention.

For instance, though a ball bearing is used as the bearing in the embodiment, it is clear to one skilled in the art that a needle bearing may be used in place of it.

## Claims

1. A multi-leaf spring-type vibration damping device in which a bearing of a rotating shaft system including at least a rotating shaft that is fit in the bearing and a rotor mounted on the rotating shaft is clamped between a plurality of fixedly mounted and properly spaced-apart multi-leaf springs at portions near distal ends thereof, or those portions near the distal ends of the plurality of multi-leaf springs contact with the bearing, thereby to suppress whirling vibrations of the bearing,
**characterized in that** each multi-leaf spring is made into a multi-leaf spring unit that has a double multi-leaf spring structure in which an auxiliary multi-leaf spring having a structure substantially identical to that of the multi-leaf spring is faced and fixed at a portion near a proximal end thereof to a portion near a proximal end of each multi-leaf spring through a spacer, and in which the distal end of the auxiliary multi-leaf spring is in advance forced in a direction opposite the multi-leaf spring so as to have a resilient force of a predetermined magnitude.

2. The multi-leaf spring-type vibration damping device as set forth in claim 1, **characterized in that** a spring constant of the auxiliary multi-leaf spring is greater than that of the multi-leaf spring.

3. The multi-leaf spring-type vibration damping device as set forth in claim 1 or 2, **characterized in that** three or more multi-leaf spring units are provided.

4. The multi-leaf spring-type vibration damping device as set forth in claim 1 or 2, **characterized in that** the bearing is a ball bearing or a needle bearing, and that a bearing holder fits on the bearing.

5. The multi-leaf spring-type vibration damping device as set forth in claim 1 or 2, **characterized in that** the auxiliary multi-leaf spring is arranged substantially parallel to the multi-leaf spring.

6. The multi-leaf spring-type vibration damping device as set forth in claim 1 or 2, **characterized in that** each multi-leaf spring unit is encircled with a lubricant.

## Patentansprüche

1. Vibrationsdämpfungsvorrichtung mit einer mehrteiligen Blattfeder, in der ein Lager eines rotierenden Wellensystems, das wenigstens eine in dem Lager aufgenommene rotierende Welle und einen an der rotierenden Welle angebrachten Rotor aufweist, zwischen einer Vielzahl von fest angebrachten und geeignet voneinander beabstandeten mehrteiligen Blattfedern in Abschnitten nahe deren distalen Enden eingeklemmt ist oder die Abschnitte nahe der distalen Enden der Vielzahl von mehrteiligen Blattfedern mit dem Lager in Kontakt stehen, wodurch Drehschwingungen des Lagers gedämpft werden,
**dadurch gekennzeichnet, dass** jede mehrteilige Blattfeder als eine mehrteilige Blattfedereinheit ausgeführt ist, die einen doppelten mehrteiligen Blattfederaufbau aufweist, bei dem eine zusätzliche mehrteilige Blattfeder einen zu der gegenüberliegenden mehrteiligen Blattfeder im Wesentlichen identischen Aufbau aufweist, und an einem ihrem proximalen Ende nahen Abschnitt über einen Abstandshalter an einem Abschnitt nahe eines proximalen Endes jeder mehrteiligen Blattfeder angebracht ist, und wobei das distale Ende der zusätzlichen mehrteiligen Blattfeder in einer entgegengesetzten Richtung zu der Richtung der mehrteiligen Blattfeder vorgespannt ist, so dass sie eine Federkraft mit einem vorbestimmten Betrag aufweist.

2. Vibrationsdämpfungsvorrichtung mit einer mehrteiligen Blattfeder nach Anspruch 1,
**dadurch gekennzeichnet, dass** eine Federkonstante der zusätzlichen mehrteiligen Blattfeder größer als die der mehrteiligen Blattfeder ist.

3. Vibrationsdämpfungsvorrichtung mit einer mehrteiligen Blattfeder nach einem der Ansprüche 1 oder 2,
**dadurch gekennzeichnet, dass** drei oder mehr mehrteilige Blattfedereinheiten vorgesehen sind.

4. Vibrationsdämpfungsvorrichtung mit einer mehrteiligen Blattfeder nach einem der Ansprüche 1 oder 2,
**dadurch gekennzeichnet, dass** das Lager ein Kugellager oder ein Nagellager ist und dass ein Lagerhalter an das Lager angepasst ist.

5. Vibrationsdämpfungsvorrichtung mit einer mehrteiligen Blattfeder nach einem der Ansprüche 1 oder 2,
**dadurch gekennzeichnet, dass** die zusätzliche mehrteilige Blattfeder im Wesentlichen parallel zu der mehrteiligen Blattfeder angeordnet ist.

6. Vibrationsdämpfungsvorrichtung mit einer mehrteiligen Blattfeder nach einem der Ansprüche 1 oder 2,
**dadurch gekennzeichnet, dass** jede mehrteilige Blattfedereinheit von Schmiermittel umgeben ist.

## Revendications

1. Dispositif d'amortissement de vibrations de type à ressorts à lames multiples dans lequel un roulement d'un système d'arbre rotatif incluant au moins un arbre rotatif qui est ajusté dans le roulement et un rotor monté sur l'arbre rotatif est pincé entre une pluralité de ressorts à lames multiples montés de façon fixe et espacés de façon adéquate au niveau de parties à proximité d'extrémités distales de ceux-ci, ou des parties à proximité des extrémités distales de la pluralité de ressorts à lames multiples sont en contact avec le roulement, pour ainsi supprimer des vibrations de tourbillon du roulement,
**caractérisé en ce que** chaque ressort à lames multiples est constitué en une unité de ressort à lames multiples qui a une structure de ressort à lames multiples double dans laquelle un ressort à lames multiples auxiliaire ayant une structure substantiellement identique à celle du ressort à lames multiples fait face à et est fixé au niveau d'une partie à proximité d'une extrémité proximale de celui-ci à une partie à proximité d'une extrémité proximale de chaque ressort à lames multiples par l'intermédiaire d'un espaceur, et dans lequel l'extrémité distale du ressort à lames multiples auxiliaire est au préalable forcée dans une direction opposée au ressort à lames multiples de façon à avoir une force de résilience d'une grandeur prédéterminé.

2. Dispositif d'amortissement de vibrations de type à ressorts à lames multiples selon la revendication 1, **caractérisé en ce qu'**une constante de ressort du ressort à lames multiples auxiliaire est plus grande que celle du ressort à lames multiples.

3. Dispositif d'amortissement de vibrations de type à ressorts à lames multiples selon la revendication 1 ou 2, **caractérisé en ce que** trois unités de ressort à lames multiples ou plus sont prévues.

4. Dispositif d'amortissement de vibrations de type à ressorts à lames multiples selon la revendication 1 ou 2, **caractérisé en ce que** le roulement est un roulement à billes ou un roulement à aiguilles et qu'un porte-roulement est ajusté sur le roulement.

5. Dispositif d'amortissement de vibrations de type à ressorts à lames multiples selon la revendication 1 ou 2, **caractérisé en ce que** le ressort à lames multiples auxiliaire est agencé substantiellement parallèlement au ressort à lames multiples.

6. Dispositif d'amortissement de vibrations de type à ressorts à lames multiples selon la revendication 1 ou 2, **caractérisé en ce que** chaque unité de ressort à lames multiples est entourée avec un lubrifiant.
